Europäisches Patentamt

European Patent Office

Office européen des brevets

(11) Veröffentlichungsnummer: **0 309 974 B1**

# EUROPÄISCHE PATENTSCHRIFT

(45) Veröffentlichungstag der Patentschrift: **11.03.92**

(21) Anmeldenummer: **88115850.5**

(22) Anmeldetag: **27.09.88**

Verbunden mit 88908217.8/0338040
(europäische
Anmeldenummer/Veröffentlichungsnummer)
durch Entscheidung vom 26.06.91.

(51) Int. Cl.⁵: **H04B 1/66**

(54) **Verfahren zur Übertragung eines Audio-Signals.**

(30) Priorität: **30.09.87 DE 3733016**

(43) Veröffentlichungstag der Anmeldung:
**05.04.89 Patentblatt 89/14**

(45) Bekanntmachung des Hinweises auf die
Patenterteilung:
**11.03.92 Patentblatt 92/11**

(84) Benannte Vertragsstaaten:
**AT BE CH DE ES FR GB GR IT LI LU NL SE**

(56) Entgegenhaltungen:
**EP-A- 0 193 143**
**WO-A-83/03935**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Vössing, Walter, Dipl.-Ing.
Am Weingarten 14
W-3015 Wennigsen 1(DE)**
Erfinder: **Hein, Ronald, Dipl.-Ing.
Bauernwinkel 2
W-3160 Lehrte(DE)**

## Beschreibung

Die Erfindung betrifft ein Verfahren zur Übertragung eines AudioSignals nach dem Oberbegriff des Anspruchs 1.

Bei der Übertragung eines Audiosignals, z.B. bei der Rundfunkübertragung, Kabelübertragung, Satellitenübertragung und bei Aufzeichnungsgeräten ist es bekannt, das analoge Audiosignal in ein digitales Audiosignal mit einer bestimmten Auflösung umzuwandeln, in dieser Form zu übertragen und bei der Wiedergabe wieder in ein analoges Signal umzusetzen. Durch die digitale Übertragung wird insbesondere bei der Wiedergabe ein größerer Störabstand erreicht.

Die für die Übertragung eines solchen Signals erforderliche Bandbreite ist im wesentlichen bestimmt durch die Zahl der zu übertragenden Abtastwerte pro Zeiteinheit sowie durch die Auflösung.

In der Praxis besteht die Forderung, die für die Übertragung notwendige Bandbreite möglichst klein zu halten, um mit einem schmalbandigen Kanal auszukommen oder über einen vorhandenen Kanal möglichst viele Audiosignale gleichzeitig übertragen zu können. Die erforderliche Bandbreite läßt sich an sich verringern durch eine Reduzierung der Abtastwerte oder der Anzahl der Bits pro Abtastwert.

Diese Maßnahme hat aber in der Regel eine Verschlechterung bei der Wiedergabe zur Folge. Bei einem aus der DE-A-35 06 912 bekannten Verfahren wird zur Verbesserung der Wiedergabequalität das digitale Audiosignal in zeitlich aufeinanderfolgenden Abschnitten in ein Kurzzeitspektrum transformiert, welches jeweils für die Zeitabschnitte, z.B. 20 ms, die Spektralkomponenten des Signals darstellt. In dem Kurzzeitsprektrum lassen sich auf Grund psyocho-akustischer Gesetzmäßigkeiten im allgemeinen Komponenten, die vom Hörer nicht wahrgenommen werden, also im nachrichtentechnischen Sinn irrelevant sind, besser auffinden, als im Zeitbereich. Diese Komponenten werden bei der Übertragung weniger gewichtet oder ganz weggelassen. Durch diese Maßnahme kann bei der Übertragung ein beträchtlicher Teil der sonst notwendigen Daten entfallen, so daß die mittlere Bitrate beträchtlich verringert werden kann. Daher wird zur Codierung der in den Zeitabschnitten vorhandenen Spektralkomponenten, nämlich der Beträge und Phasen, nur eine begrenzte Anzahl von Bit zur Verfügung gestellt, die durch die angestrebte Datenreduktion vorgegeben ist.

Für die Übertragung der transformierten Werte, es handelt sich dabei um Beträge, sowie um Phasen, die die Spektrallinien der Blöcke des Audio-Signals kennzeichnen, werden aus einer vorhandenen Anzahl von Bits, die maximal für jeden Block zur Verfügung stehen, einige diesen Spektrallinien zugeordnet. Dabei kommt es darauf an, diese Werte möglichst genau zu quantisieren. Die Zuteilung der Bit nach einem Rekursiv-Verfahren erfordert einen erheblichen Rechenaufwand, der eine Verarbeitung in Echtzeit nahezu unmöglich macht.

Der Erfindung liegt die Aufgabe zugrunde, bei dem eingangs beschriebenen Verfahren die zur Codierung zur Verfügung stehenden Bit den zu übertragenden Spektralkomponenten so zuzuweisen, daß eine der Wichtung der Spektralkomponenten entsprechend Quantisierung bei möglichst vollständiger Verwertung der zur Verfügung stehenden Bit innerhalb kurzer Zeit realisierbar ist.

Diese Aufgabe wird durch die im kennzeichnenden Teil des Anspruchs 1 angegebenen Merkmale gelöst.

Bei der Bit-Zuteilung wird zunächst so vorgegangen, daß dem absoluten Betragsmaximum, den Betragsmaxima in Frequenzgruppen des Kurzzeitspektrum, den Adressen der Betragsmaxima und der Dynamik der Frequenzgruppen eine vorgegebene Anzahl von Bit zugewiesen werden. Aus der Dynamik der Gruppen werden Quantisierungskennzahlen gewonnen und den restlichen Beträgen entsprechend der Quantisierungskennzahlen Bit zugewiesen. Mit der gleichen Anzahl Bit werden die Phasen quantisiert.

Die Zuweisung der Bit anhand der Quantisierungskennzahlen stellt eine Grobquantisierung dar. Sie ist so bemessen, daß auch bei Kurzzeitspektren mit vielen zu übertragenden Betrags- und Phasenwerten die Anzahl der zur Codierung zur Verfügung stehenden Bit für eine anfängliche Zuweisung ausreicht.

Daraus resultiert bei Kurzzeitspektren mit wenigen zu übertragenden Betrags- und Phasenwerten eine mehr oder weniger große Anzahl restlicher Bit. Diese werden nun denjenigen Beträgen- und Phasenwerten zugewiesen, die anfänglich anhand der Quantisierungskennzahlen nur grob quantisiert wurden. Für die folgenden Schritte werden die Absolutwerte der grobquantisierten Betragswerte ermittelt, also die exakten, nicht durch die Grobquantisierung verfälschten Werte.

Anschließend wird eine Steuergröße festgelegt, die die Verteilung der restliche Bit auf ausgewählte Spektralkomponenten steuert. Sie wird als Schwelle in das Betragsspektrum gelegt, wobei sich die Höhe der Schwelle nach der Anzahl der bei der Grobquantisierung nicht verteilten Bit richtet.

Nach Vergleich der Steuergröße mit den grobquantisierten Beträgen werden nur diejenigen Werte für die Bitzuweisung ausgewählt, welche oberhalb der Steuergröße liegen. Durch Differenzbildung zwischen den grobquantisierten Beträgen und der Steuergröße wird ein modifiziertes Spektrum als Grundlage für die weitere Bitzuweisung gebildet. Die Beträge dieses modifizierten Spektrums werden summiert. Aus den nicht verteilten Bit, geteilt durch die zuvor ermittelte Summe der Beträge, ergibt sich eine Kenngröße als Bit pro dB. Durch Multiplikation der Beträge des Spektrums, die noch für die Zuteilung von Bits ausgewählt sind, mit der Kenngröße ergeben sich die Anzahlen der Bits, die auf die ausgewählten Beträge des Spektrums aufgeteilt werden.

Diese Werte sind im allgemeinen nicht ganzzahlig. Da aber Bits nur ganzzahlig verteilt werden können, verbleibt eine Restzahl Bits, die noch für eine Aufteilung zur Verfügung steht. Diese Bits können entweder unberücksichtigt bleiben, oder durch Auf-und Abrunden und entsprechend den absoluten Beträgen der Betragswerte des Spektrums verteilt werden.

Weiterbildungen und vorteilhafte Ausgestaltungen der Erfindung ergeben sich aus den Ansprüchen, der Beschreibung und der Zeichnung, die die Erfindung näher erläutert.

In der Zeichnung zeigen:
Fig. 1 einen Block eines in den Frequenzbereich transformierten Audiosignals in Betragsdarstellung,
Fig. 2 ein modifiziertes Spektrum.

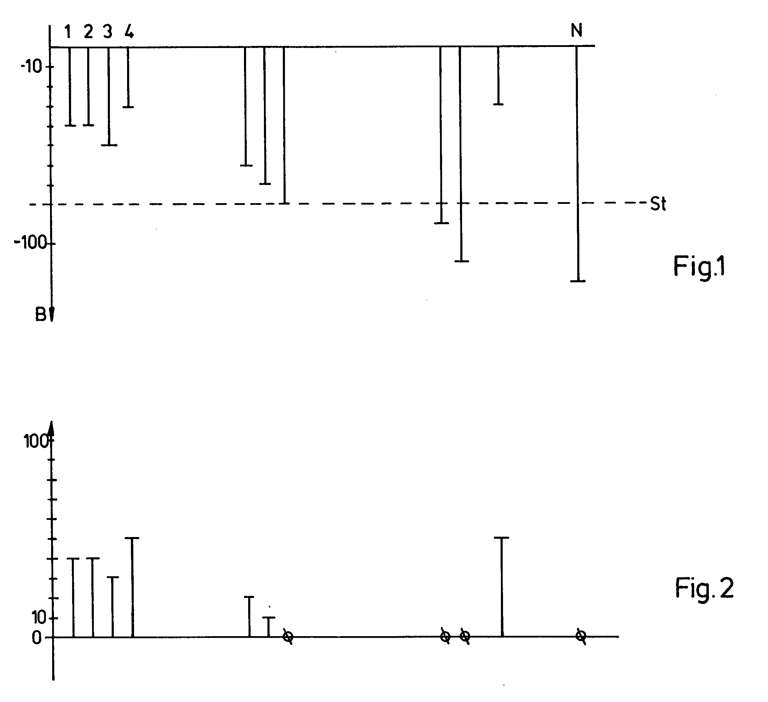

Das in Fig. 1 dargestellte Signal ergibt sich, indem ein tiefpaßgefiltertes Audiosignal durch einen Analog/Digital-Wandler in ein Digitalsignal umgewandelt, durch ein Zeitfenster ein bestimmter Abschnitt des digitalen Audiosignals aus dem Langzeitsignal ausgeschnitten und der so erhaltene Block vom Zeitbereich in den Frequenzbereich transformiert wird. Bei der Darstellung sind eine Anzahl I innerhalb eines transformierten Blockes auftretende Spektrallinien auf eine O-dB-Linie bezogen aufgetragen. Es handelt sich hierbei um die Beträge B. Eine Steuergröße St, welche sich aus der Anzahl der nicht verteilten Bits ergibt, ist als waagerechte Linie eingezeichnet. Sie wird nach der empirischen Formel bestimmt:

St = k1 + f*(Anzahl gesparter Bit - k2),

wobei hier folgende Parameter gesetzt wurden:
k1 = 30 dB
f = 0,06 dB
k2 = 447
Wie zu erkennen ist, enden die Spektrallinien teilweise oberhalb, teilweise unterhalb der Steuergröße St. Die unterhalb der Steuergröße liegenden Beträge B erhalten keine Bits zugewiesen. Durch Differenzbildung zwischen den oberhalb der Steuergröße St liegenden Beträgen B und der Steuergröße St selbst ergibt sich ein modifiziertes Spektrum, das in Fig. 2 dargestellt ist. Zur Ermittlung des Maßes für die Zuteilung der Bits für die folgende Feinquantisierung wird die Steuergröße St mit den Beträgen B verglichen. Dabei werden nur diejenigen Beträge B berücksichtigt, die oberhalb der Steuergröße B liegen. Das Ergebnis ist in Fig. 2 dargestellt. Die Beträge B dieses modifizierten Spektrums werden summiert. Die Aufsummierung der Werte B erfolgt nach der Formel:

$$S = \text{Summe } B(I) \text{ mit } I = 1 \text{ bis } N.$$

Aus den nicht verteilten Bit, geteilt durch die zuvor ermittelte Summe S der Beträge, ergibt sich eine Kenngröße X als Bit pro dB. Durch Multiplikation der Beträge B des Spektrums, die noch für die Zuteilung von Bits ausgewählt sind, mit der Kenngröße X ergeben sich die Anzahlen der Bits, die auf die ausgewählten Beträge des Spektrums aufgeteilt werden, und zwar nach folgender Formel:

$$\text{Bit pro Spektr.}(I) = X * B(I) \text{ wobei } 1 \leq I \leq N.$$

Diese Werte sind im allgemeinen nicht ganzzahlig. Da aber Bits nur ganzzahlig verteilt werden können, verbleibt eine Restzahl, die noch für eine Aufteilung zur Verfügung steht. Diese Bits werden durch Runden und Übertragen des Rests entsprechend den absoluten Beträgen der Betragswerte des Spektrums verteilt.

Dabei wird wie folgt vorgegangen: Die erste zu verteilende Anzahl von Bit wird zunächst abgerundet und der Rest zwischen der nicht ganzzahligen und der ganzzahligen Anzahl von Bit zwischengespeichert. Anschließend wird der zwischengespeicherte Rest zu der nächsten zu verteilenden Bit-Anzahl addiert. Die so erhaltene Summe wird wieder abgerundet und der Rest erneut zwischengespeichert. Der Rest wird zu der nächsten zu verteilenden Anzahl von Bit addiert. Diese Zyklen werden bei jedem zu quantisierenden Betragswert wiederholt, bis die letzte zu verteilende Anzahl von Bit verteilt ist. Da nach Addition mehrerer Reste mit großer Wahrscheinlichkeit der Wert "eins" erreicht wird, kann nach mehreren Zyklen wiederholt ein weiteres Bit verteilt werden so daß am schließlich nur noch ein oder kein Bit mehr übrig bleibt.

**Patentansprüche**

1. Verfahren zur Übertragung eines Audio-Signals, bei dem das analoge Signal in ein digitales Signal umgewandelt, digital übertragen und wieder in ein analoges Signal umgesetzt wird, wobei das Signal vor der Übertragung in ein Kurzzeitspektrum umgewandelt wird, das durch Beträge und Phasen dargestellt ist, für deren Übertragung eine vorgegebene Anzahl von Bit zur Verfügung steht und Anteile des Spektrums auf Basis psychoakustischer Gesetzmäßigkeiten bei der Codierung in ihrer Darstellungsgenauigkeit verschieden gewichtet werden, **gekennzeichnet** durch folgende Verfahrensschritte:

a. Grobquantisierung der Beträge und Phasen durch Zuweisung eines Teils der zu verteilenden Bit,

b. Bestimmung der Absolutbeträge der grobquantisierten Betragswerte,

c. Bestimmung einer Steuergröße in Abhängigkeit des restlichen Teils der zu verteilenden Bit,

d. Vergleich der Steuergröße mit den grobquantisierten Beträgen,

e. Bildung der Differenz zwischen den grobquantisierten Beträgen und der Steuergröße zur Erzielung eines modifizierten Spektrums als Grundlage für die weitere Bitzuweisung,

f. Bildung der Summe der Beträge des modifizierten Spektrums,

g. Ermittlung einer Kenngröße aus den gesparten Bit und der vorher gebildeten Summe

h. Zuweisung der restlichen Bit zu den Beträgen und Phasen anhand der Kenngröße.

2. Verfahren nach Anspruch 1, **dadurch gekennzeichnet**, daß die für die Zuweisung zu den bereits grobquantisierten Beträgen und Phasen errechneten Anzahlen von Bit in ganzzahlige, positive Anzahlen von Bit überführt werden.

3. Verfahren nach Anspruch 2, **dadurch gekennzeichnet**, daß die nicht ganzzahligen Anzahlen von Bit stets abgerundet werden.

4. Verfahren nach Anspruch 2, **dadurch gekennzeichnet**, daß die nicht ganzzahligen Anzahlen von Bit in Abhängigkeit der zur Zuweisung verfügbaren Bit ab- und aufgerundet werden.

5. Verfahren nach Anspruch 2, **dadurch gekennzeichnet**, daß die erste zu verteilende Anzahl von Bit zunächst abgerundet wird und der Rest zwischen der nicht ganzzahligen und der ganzzahligen Anzahl von Bit zwischengespeichert wird, daß der zwischengespeicherte Rest zu der nächsten zu verteilenden Bit-Anzahl addiert wird, daß die erhaltene Summe abgerundet wird und der Rest wieder zwischengespeichert und anschließend zu der nächsten zu verteilenden Anzahl von Bit addiert wird, bis die letzte zu verteilende Anzahl von Bit verteilt ist.

6. Verfahren nach einem oder mehreren der Ansprüche 1 bis 4, **dadurch gekennzeichnet**, daß die Steuergröße nach folgender empirischer Formel bestimmt wird:

St = k1 f*(Anzahl gesparter Bit - k2),

wobei in einer bevorzugter Ausführung folgende Parameter gesetzt wurden:

k1 = 30 dB
f = 0,06 dB
k2 = 447

**Claims**

1. A method of transmitting an audio signal, in which the analogue signal is converted into a digital signal, digitally transmitted and converted back into an analogue signal, in which the signal is converted into a short-time spectrum before transmission, which spectrum is represented by magnitudes and phases, for whose transmission a predetermined number of bits are available and in which proportions of the spectrum are differently weighted based on psychoacoustic laws when coding in their accuracy of representation, **characterised by** the following method steps:

a. rough quantisation of the magnitudes and phases by allocation of a part of the bits to be distributed

b. determining the absolute values of the roughly quantised magnitude values,

c. determining a control variable according to the residual part of the bits to be distributed,

d. comparison of the control variable with the roughly quantised magnitudes,

e. forming the difference between the roughly quantised magnitudes and the control variable in order to achieve a modified spectrum as the basis for the further bit allocation.

f. forming the sum of the magnitudes of the modified spectrum,

g. ascertaining a parameter from the economised bits and the previously formed sum

h. allotting the residual bits to the magnitudes and phases using the parameter.

2. A method according to claim 1, **characterised in that** the numbers of bits calculated for allocation to the already roughly quantised magnitudes and phases are transferred into whole-numbered, positive numbers of bits.

3. A method according to claim 2, **characterised in that** the non-whole-numbered numbers of bits are always rounded off.

4. A method according to claim 2, **characterised**

**in that** the non-whole-numbered numbers of bits are rounded up and down according to the bits ready to be allocated.

5. A method according to claim 2, **characterised in that** the first number of bits to be distributed is initially rounded off and the remainder is temporarily stored between the non-whole-numbered and the whole-numbered number of bits, that the temporarily stored remainder is added to the next number of bits to be distributed, that the sum obtained is rounded off and the remainder is again temporarily stored and then added to the next number of bits to be distributed, until the last number of bits to be distributed is distributed.

6. A method according to one or more of claims 1 to 4, **characterised in that** the control variable is determined according to the following empirical formula:

$$St = k1 + f* (Number\ of\ economised\ bits - k2),$$

in which the following parameters were used in a preferred embodiment:
k1 = 30 dB
f = 0.06 dB
k2 = 447

**Revendications**

1. Procédé pour la transmission d'un signal son dans lequel le signal analogique est transformé en un signal numérique, est transmis numériquement et est retransformé en un signal analogique, le signal étant transformé avant transmission en un spectre pour une courte durée qui est représenté par des quantités et des phases pour la transmission desquels un nombre prédéterminé de bits est disponible et des fractions du spectre sont pondérées, lors du codage, de manière différente dans leur exactitude de représentation sur la base de lois générales psychoacoustiques, **caractérisé par** les mesures de procédé suivantes :
a. quantification des quantités et phases par assignation d'une partie des bits à répartir,
b. détermination des valeurs absolues des quantités grossièrement quantifiées,
c. détermination d'une grandeur de commande en fonction de la partie restante de bits à repartir,
d. comparaison de la grandeur de commande aux quantités grossièrement quantifiées,
e. formation de la différence entre les quantités grossièrement quantifiées et la grandeur de commande pour obtenir un spectre modifié comme base pour l'assignation ultérieure des bits,
f. formation de la somme des quantités du spectre modifié,
g. détermination d'une grandeur caractéristique à partir des bits économisés et de la somme auparavant formée,
h. assignation des bits restants aux quantités et phases à l'aide de la grandeur caractéristique.

2. Procédé selon la revendication 1, **caractérisé en ce** que les nombres de bits calculés pour l'assignation aux quantités déjà grossièrement quantifiées et aux phases sont transmis en nombres de bits en nombres entiers positifs.

3. Procédé selon la revendication 2, **caractérisé en ce** que les nombres de bits qui ne sont pas des nombres entiers sont toujours arrondis au chiffre inférieur.

4. Procédé selon la revendication 2, **caractérisé en ce** que les nombres de bits qui ne sont pas des nombres entiers sont arrondis au nombre inférieur et au nombre supérieur en fonction des bits disponibles pour l'assignation.

5. Procédé selon la revendication 2, **caractérisé en ce** que le premier nombre de bits à répartir est tout d'abord arrondi au nombre inférieur et le reste entre le nombre de bits en nombre entier et le nombre de bits qui n'est pas un nombre entier est mis en mémoire temporaire, que le reste mis en mémoire temporaire est ajouté au prochain nombre de bits à répartir, que la somme obtenue est arrondie au nombre inférieur et que le reste est à nouveau mis en mémoire temporaire et ensuite ajouté au prochain nombre de bits à répartir jusqu'à ce que le dernier nombre de bits à répartir soit réparti.

6. Procédé selon l'une ou plusieurs des revendications 1 à 4, **caractérisé en ce** que la grandeur de commande est déterminée par la formule empirique suivante :

$$St = k1 + f* (nombre\ de\ bits\ économisés - k2),$$

les paramètres suivants étant utilisés dans une forme de réalisation préférée :
k1 = 30 dB
f = 0,06 dB
k2 = 447

Fig.1

Fig.2

6